# EUROPEAN PATENT APPLICATION

(11) **EP 4 571 153 A1**
(43) Date of publication of application: **18.06.2025**
(21) Application number: 23217040.7
(22) Date of filing: 15.12.2023
(51) Int. Cl.: F16K 1/32, F16K 1/42, F16K 3/24, F16K 11/044

(54) **A VALVE WITH A BIASING ELEMENT AND A CUP-SHAPED CONNECTOR ELEMENT**

(71) Applicant: Danfoss A/S, 6430 Nordborg (DK)
(72) Inventor: ZAGAR, Tomaz, 6430 Nordborg (DK)
(74) Representative: Inspicos P/S

(57) **Abstract**

A valve (1) comprising a valve housing (2) accommodating a movable valve element (8) for controlling a fluid flow through the valve (1), and an actuator (9) being operatively connected to the movable valve element (8) so as to cause movements thereof is disclosed. A cup-shaped connector element (10) is connected to the movable valve element (8), the cup-shaped connector element (10) defining a bottom (22), at least one wall part (23) and an open top (24), and a biasing element (20) is configured to bias the cup-shaped connector element (10) in a first direction. At least the bottom (22) of the cup-shaped connector element (10) is surrounded by the biasing element (20), and the actuator (9) is configured to push the cup-shaped connector element (10) in a second direction being opposite to the first direction, against a biasing force provided by the biasing element (20), via a contact region defined on the bottom (22) of the cup-shaped connector element (10).

## Description

### FIELD OF THE INVENTION

The present invention relates to a valve comprising a valve housing accommodating a movable valve element for controlling a fluid flow through the valve, and an actuator being operatively connected to the movable valve element. The valve according to the invention is very compact.

### BACKGROUND OF THE INVENTION

Controllable valves normally comprise a movable valve element accommodated in a valve housing in such a manner that movements of the valve element control the fluid flow through the valve. For instance, the position of the movable valve element may determine at least one opening degree of the valve. The movements of the valve element, and thereby the fluid flow through the valve, may be controlled by appropriately controlling an actuator being operably connected to the movable valve element.

The valve element may, e.g., move along at least one opening formed inside the valve, in such a manner that the position of the valve element relative to the opening defines a cross sectional size of the opening being available for fluid flowing therethrough, thus defining an opening degree of the valve with respect to a fluid connection which includes the opening.

In order to cause the movements of the valve element, the valve element may be operably connected to an actuator. Thereby appropriate operation of the actuator will cause desired movements of the valve element, thus controlling the fluid flow through the valve.

The connection between the actuator and the movable valve element may include a connector element which is biased in a first direction by means of a biasing element. The first direction may, e.g., be a direction which moves the connector element towards or away from the actuator. For instance, the first direction may move the movable valve element towards a fully open position of a fluid connection defined by the valve, or towards a fully closed position of the fluid connection. The actuator may then act on the connector element and against the biasing force of the biasing element in order to move the valve element towards a fully closed position of the fluid connection, or towards the fully open position of the fluid connection, respectively. However, such a design of the valve may be bulky, since the valve housing needs to accommodate the connector element end-to-end with the biasing element, as well as the elongation of the biasing element.

### DESCRIPTION OF THE INVENTION

It is an object of embodiments of the invention to provide a valve with a movable valve element operably connected to an actuator which is more compact than prior art valves.

The invention provides a valve comprising a valve housing accommodating a movable valve element for controlling a fluid flow through the valve, and an actuator being operatively connected to the movable valve element so as to cause movements thereof, wherein the valve further comprises:
- a cup-shaped connector element connected to the movable valve element, the cup-shaped connector element defining a bottom, at least one wall part and an open top, and
- a biasing element configured to bias the cup-shaped connector element in a first direction,
wherein at least the bottom of the cup-shaped connector element is surrounded by the biasing element, and wherein the actuator is configured to push the cup-shaped connector element in a second direction being opposite to the first direction, against a biasing force provided by the biasing element, via a contact region defined on the bottom of the cup-shaped connector element.

Thus, the valve according to the invention comprises a valve housing accommodating a movable valve element. The valve housing may, e.g., comprise a first port and a second port, the valve defining a fluid connection between the first port and the second port. Fluid flowing through the valve may flow in either direction, i.e. from the first port, acting as a fluid inlet, to the second port, acting as a fluid outlet, or from the second port, acting as a fluid inlet, to the first port, acting as a fluid outlet. The direction of the fluid flow through the valve may even be selected, depending on the requirements at a given point in time.

The movable valve element controls the fluid flow through the valve. For instance, the valve element may be movable along an opening forming part of the fluid connection between the first port and the second port, e.g. an opening towards the second port. In this case the position of the valve element relative to the opening defines a cross sectional size of the opening being available for fluid flowing therethrough, thus determining a fluid flow in the fluid connection between the first port and the second port.

For instance, the valve element may be movable between a first end position defining a fully open fluid connection between the first port and the second port, and a second end position defining a fully closed fluid connection between the first port and the second port, and intermediate positions of the valve element may define a partly open fluid connection between the first port and the second port.

The valve further comprises an actuator being operatively connected to the movable valve element so as to cause the movements of the valve element described above, thus controlling the fluid flow through the valve.

The valve further comprises a cup-shaped connector element connected to the movable valve element and a biasing element configured to bias the cup-shaped connector element in a first direction. Thus, the cup-shaped connector element and the biasing element form part of the operative connection between the actuator and the movable valve element.

The cup-shaped connector element defines a bottom, at least one wall part and an open top, the at least one wall part interconnecting the bottom and the open top. The bottom may be closed, or it may define opening therein. Similarly, the at least one wall part may be in form or a single closed wall part interconnecting the bottom and the open top, or it may be in the form of several wall parts, e.g. similar to bars, arranged with spacing there between. The cup-shaped connector element may, thus, be substantially cylindrical with one closed end and one open end.

The cup-shaped connector element and the biasing element are positioned relative to each other in such a manner that at least the bottom of the cup-shaped connector element is surrounded by the biasing element. Thus, the cup-shaped connector element is at least partly positioned within the biasing element. This reduces the size of the valve, since the connector element and the biasing element need not be arranged end-to-end. Furthermore, arranging the cup-shaped connector element at least partly within the biasing element, ensures a firm engagement between the cup-shaped connector element and the biasing element, and the firm engagement stabilizes the biasing element.

The actuator is configured to push the cup-shaped connector element in a second direction being opposite to the first direction, i.e. in a direction which is opposite to the direction in which the biasing element biases the cup-shaped connector element. Accordingly, the actuator pushes the cup-shaped connector element against the biasing force provided by the biasing element.

The actuator pushes the cup-shaped connector element, thus acting on the cup-shaped connector element, via a contact region defined on the bottom of the cup-shaped connector part. Accordingly, the transfer of force from the actuator to the cup-shaped connector element takes place at a part of the cup-shaped connector element which is arranged within the biasing element. This ensures a stable and uniform transfer of force from the actuator to the cup-shaped connector element, and further on to the movable valve element. The stabilization of the biasing element provided by the firm engagement between the cup-shaped connector element and the biasing element may result in a valve which can be controlled with relatively high accuracy.

At least part of the actuator may be accommodated in an inner space of the cup-shaped connector element, the inner space being delimited by the bottom and the at least one wall part. According to this embodiment, at least part of the biasing element, the cup-shaped connector element and the actuator are arranged substantially concentrically. This minimises the required size of the valve, in particular the height required for accommodating these three parts.

The cup-shaped connector element may comprise an annular collar arranged near the open top, and the biasing element may abut the cup-shaped connector element at the annular collar. The annular collar may be a continuous collar, i.e. it may define a continuous surface along the entire circumference of the open top. As an alternative, the annular collar may comprise several parts or sections, arranged with space there between along the circumference of the open top. According to this embodiment, the cup-shaped connector element is almost entirely surrounded by or positioned within the biasing element. For instance, only the annular collar may be positioned outside the biasing element. This provides a very compact design of the valve.

The contact region may be arranged in a centre part of the bottom of the cup-shaped connector element. According to this embodiment, the transfer of force from the actuator to the cup-shaped connector element takes place in a region which is central with regard to the cup-shaped element, and thereby to the biasing element which surrounds at least part of the cup-shaped connector element. This ensures that the force is transferred uniformly, and that the biasing force provided by the biasing element and the force provided by the actuator balance each other in a uniform and substantially symmetrical way. This ensures an accurate and reliable control of the valve.

The cup-shaped connector element may be connected to the movable valve element via a valve stem. According to this embodiment, a valve stem extends from the cup-shaped connector element and is arranged in contact with the movable valve element, so as to transfer a moving force from the cup-shaped connector element to the movable valve element and cause appropriate movements thereof.

The valve stem may, e.g., extend from the bottom of the cup-shaped connector element towards the movable valve element. For instance, the valve stem may extend from a centre part of the bottom, thus ensuring a substantially uniform and symmetrical transfer of force from the cup-shaped connector element to the movable valve element.

The biasing element may be a helical spring, and the cup-shaped connector element may be arranged at least partly inside the helical spring. A helical spring defines a space within the windings forming the helix of the spring, and this space is very suitable for receiving at least part of the cup-shaped connector element. Thus, a helical spring is a suitable biasing element for a valve according to the invention. As an alternative, the biasing element may be any other suitable kind of biasing element, such as a wave spring.

The cup-shaped connector element and the biasing element may be at least partly accommodated inside the valve housing. This provides a very compact valve, e.g. with a reduced height. Furthermore, a more precise and better balanced control of the biasing element is obtained.

The valve may be a three-way valve. According to this embodiment, the valve housing may comprise three ports, in the form of a first port, a second port and a third port. According to this embodiment, the valve may establish fluid connections between the first port and each of the second port and the third port. Thus, in the case that the first port forms a fluid inlet of the valve, the second port and the third port each forms a fluid outlet of the valve. In this case, fluid flow received in the valve via the first port may be selectively distributed to the second port and/or the third port. In the case that the first port forms a fluid outlet of the valve, the second port and the third port each forms a fluid inlet of the valve. In this case, fluid received in the valve via the second port and the third port, respectively, may be mixed before being supplied to the first port.

For instance, the valve element may be movable between a first end position defining a fully open fluid connection between the first port and the second port and a fully closed fluid connection between the first port and the third port, and a second end position defining a fully closed fluid connection between the first port and the second port and a fully open fluid connection between the first port and the third port. Intermediate positions of the valve element may define partly open fluid connections between the first port and each of the second port and the third port. Thus, the position of the valve element determines the fluid flow in the fluid connection between the first port and the second port, as well as the fluid flow in the fluid connection between the first port and the third port.

Three-way valves may, e.g., be used in heat pumps or other applications where it may be desired to mix fluid flows.

As an alternative, the valve may be a two-way valve, i.e. the valve may only comprise the first port and the second port.

### BRIEF DESCRIPTION OF THE DRAWINGS

The invention will now be described in further detail with reference to the accompanying drawings in which
Figs. 1 and 2 illustrate a valve according to an embodiment of the invention,
Fig. 3 is a cross sectional view of the valve of Figs. 1 and 2,
Figs. 4 and 5 are details of the cross sectional view of the valve of Fig. 3 with a movable valve element in a first end position and a second end position, and
Fig. 6 is a detail of the cross sectional view of the valve of Fig. 3 showing the cup-shaped connector element and the biasing element.

### DETAILED DESCRIPTION OF THE DRAWINGS

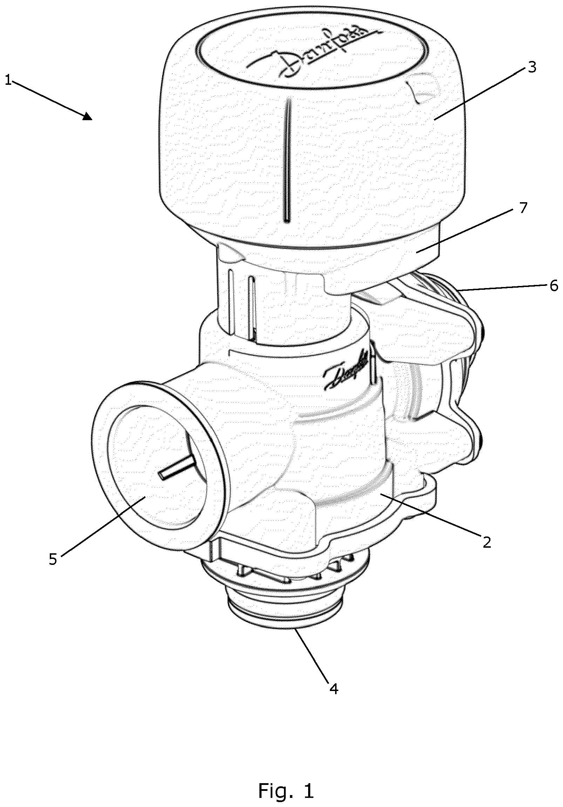

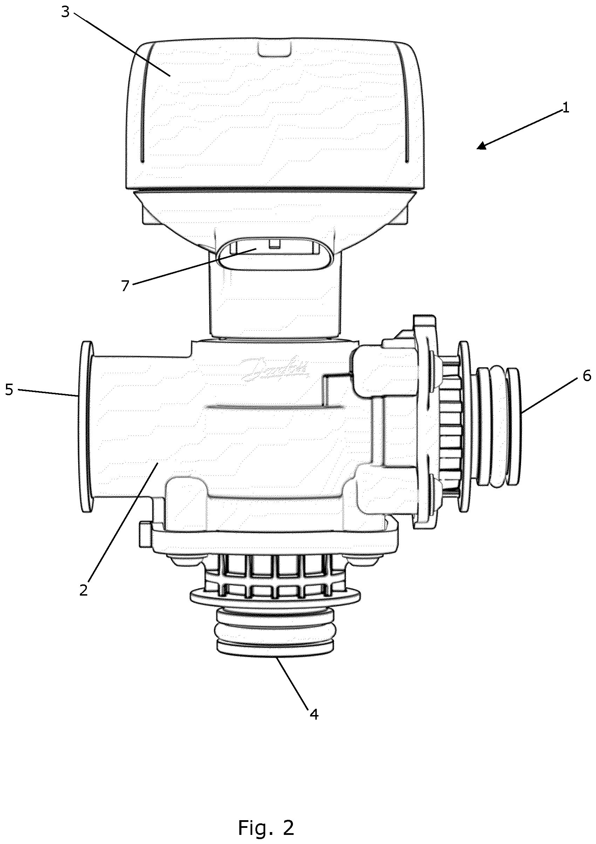

Figs. 1 and 2 illustrate a valve 1 according to an embodiment of the invention. Fig. 1 is a perspective view of the valve 1, and Fig. 2 is a side view of the valve 1.

The valve 1 comprises a valve housing 2 and an actuator housing 3 mounted on the valve housing 2. The valve housing 2 accommodates a movable valve element (not shown) and the actuator housing 3 accommodates an actuator (not shown) being operatively connected to the movable valve element. Appropriate operation of the actuator will thus cause movements of the valve element, so as to control a fluid flow through the valve 1.

The valve housing 2 has three ports, in the form of a first port 4, a second port 5 and a third port 6. Fluid connections may be selectively established between the first port 4 and each of the second port 5 and the third port 6. Accordingly, the valve 1 is a three-way valve.

The actuator housing 3 comprises a power connection 7 allowing for power to be supplied to the actuator inside the actuator housing 3, for instance to an electric motor, such as an electric stepper motor, arranged inside the actuator housing 3.

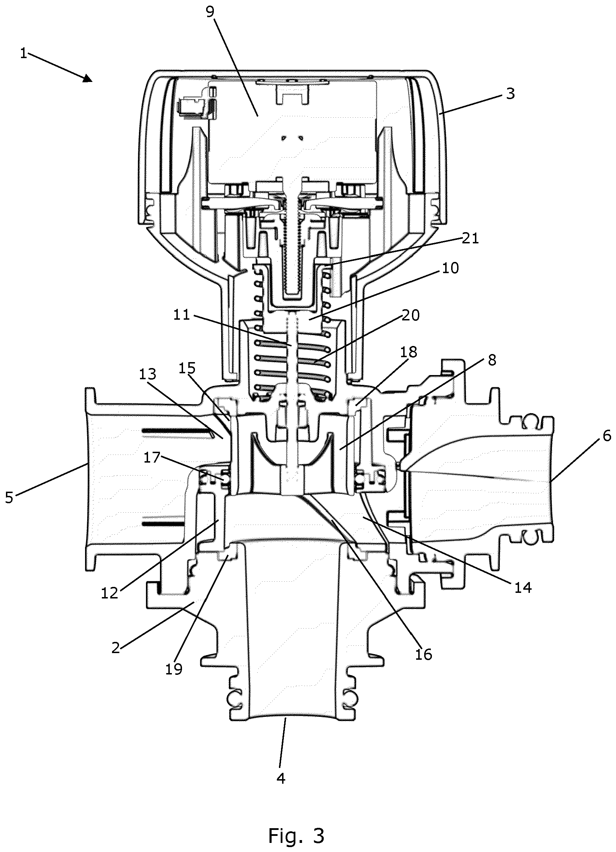

Fig. 3 is a cross sectional view of the valve 1 of Figs. 1 and 2. A valve element 8 is accommodated in the valve housing 2, and is operatively connected to an actuator 9 accommodated in the actuator housing 3, via a cup-shaped connector element 10 and a valve stem 11. Thus, appropriate operation of the actuator 9 causes the valve element 8 to move inside the valve housing 2 towards or away from the actuator housing 3.

The valve element 8 is arranged within a guiding insert 12 in which an opening 13 towards the second port 5 and an opening 14 towards the third port 6 are formed. Thus, the valve element 8 moves along the opening 13 towards the second port 5 as well as along the opening 14 towards the third port 6. Accordingly, the position of the valve element 8 determines the cross sectional size of opening 13 as well as the cross sectional size of opening 14 being available for fluid flow through the respective openings 13, 14, and thereby whether or not and to which extent the fluid connection between the first port 4 and the second port 5 as well as the fluid connection between the first port 4 and the third port 6 is open.

The guiding insert 12 comprises a lip 15 arranged along an edge of the opening 13 towards the second port 5, and a lip 16 arranged along an edge of the opening 14 towards the third port 6. The lips 15, 16 abut the valve element 8, thus ensuring that the cross sectional size and shape of fluid passages through each of the openings 13, 14, at a given position of the valve element 8, are well defined. Thereby accurate and reliable control of the fluid flow through the valve 1 is obtained, and the risk of internal leaks is minimised. Furthermore, this is obtained with minimal friction between the movable valve element 8 and other parts of the valve 1, notably the guiding insert 12, since the valve element 8 only abuts the lips 15, 16 and a sealing element 17 which prevents leaking between the second port 5 and the third port 6.

In Fig. 3, the valve element 8 is positioned in a second end position, where it abuts a first valve seat 18. In the second end position, the fluid connection between the first port 4 and the second port 5 is fully closed, and the fluid connection between the first port 4 and the third port 6 is fully open. The valve 1 further comprises a second valve seat 19, which the valve element 8 abuts when it is in a first end position, where the fluid connection between the first port 4 and the second port 5 is fully open and the fluid connection between the first port 4 and the third port 6 is fully closed.

The valve 1 further comprises a biasing element 20, in the form of a helical spring, arranged in abutment with an annular collar 21 of the cup-shaped connector element 10. Although the annular collar 21 shown in Fig. 3 defines a continuous surface along the circumference of an open top of the cup-shaped connector element 10, it should be noted that the annular collar 21 may, alternatively, be formed by a plurality of parts or sections arranged with space there between.

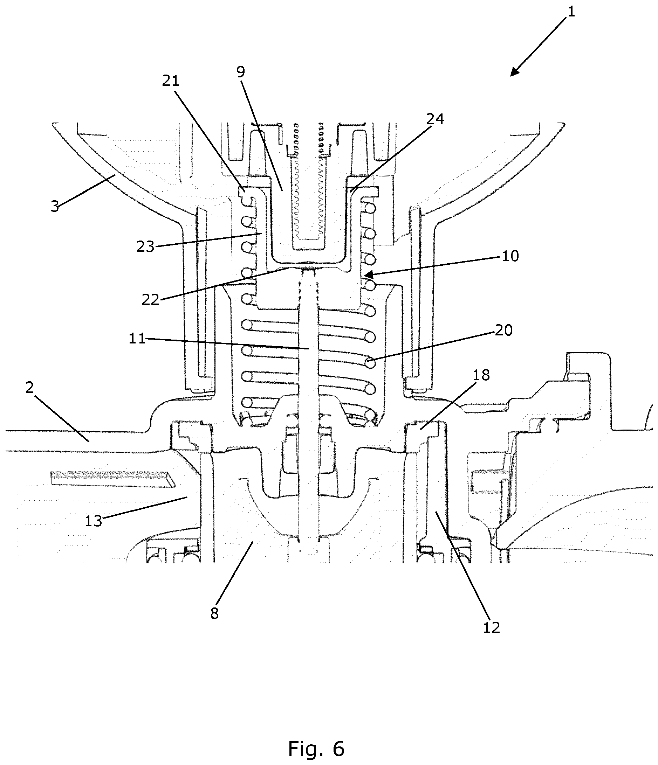

Thus, the biasing element 10 biases the cup-shaped connector element 10 in a direction towards the actuator housing 3. Due to the connection between the cup-shaped connector element 10 and the movable valve element 8, via the valve stem 11, the biasing element 20, thus, biases the movable valve element 8 towards the second end position illustrated in Fig. 3. In order to move the valve element 8 away from the second end position and towards the first end position, the actuator 9 must push the cup-shaped connector element 10 against the biasing force provided by the biasing element 20. The cooperation of the actuator 9, the cup-shaped connector element 10, the movable valve element 8 and the biasing element 20 will be described in further detail below with reference to Fig. 6.

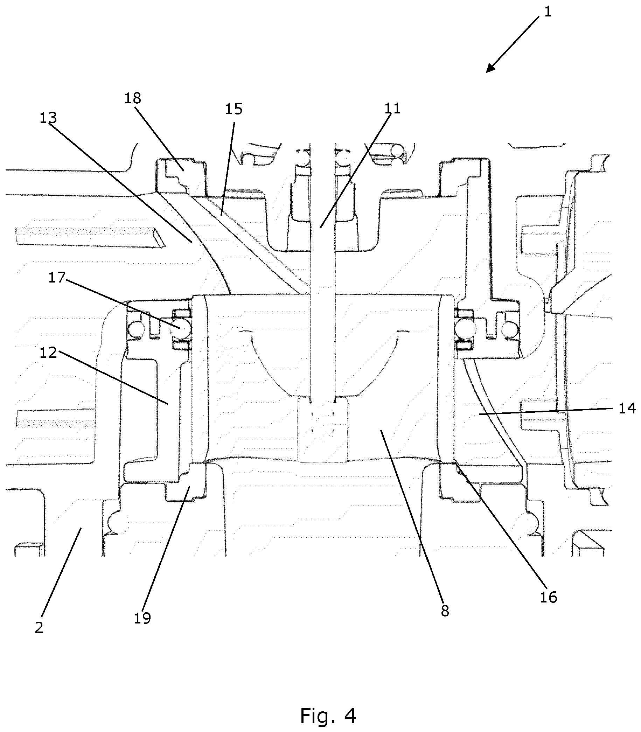

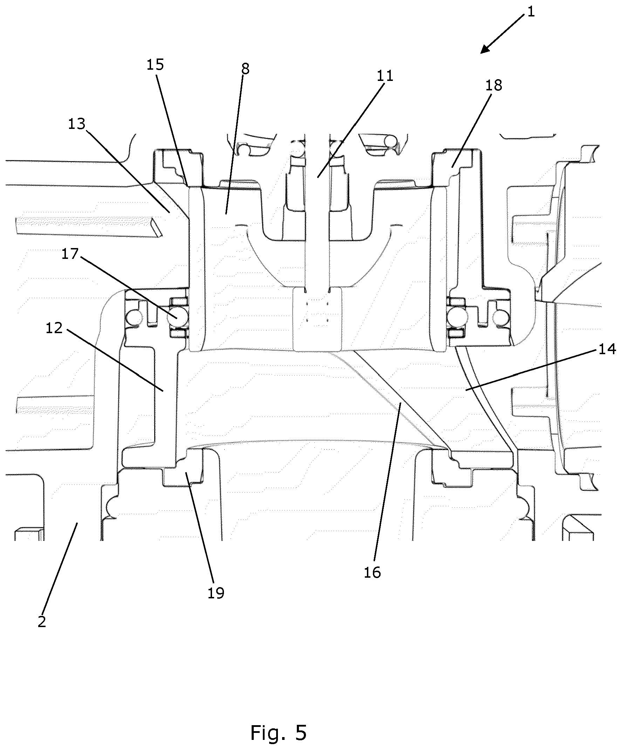

Figs. 4 and 5 are details of the cross sectional view of the valve 1 illustrated in Fig. 3. In Fig. 4 the valve element 8 is positioned in the first end position, abutting the second valve seat 19. In Fig. 5 the valve element 8 is positioned in the second end position, abutting the first valve seat 18, i.e. the position which is also illustrated in Fig. 3.

Fig. 6 is another detail of the cross sectional view of the valve illustrated in Fig. 3. In Fig. 6, the valve element 8 is positioned in the second end position, abutting the first valve seat 18, similar to Figs. 3 and 5.

In Fig. 6, the cup-shaped connector element 10 and the biasing element 20 are shown in further detail. It can be seen that the cup-shaped connector element 10 defines a closed bottom 22, a wall part 23 and an open top 24. The annular collar 21 is arranged near the open top 24. It should be noted that the bottom 22 could, alternatively, define openings therein, rather than being a closed bottom 22 as illustrated in Fig. 6. Similarly, the wall part 23 could, alternatively, be formed by a plurality of wall parts 23, arranged with space there between, so as to form openings in the wall part 23.

It can further be seen that the cup-shaped connector element 10 is almost entirely surrounded by the biasing element 20, and that the biasing element 20 abuts a lower part of the annular collar 21. Accordingly, a firm abutment between the cup-shaped connector part 10 and the biasing element 20 is obtained, thus stabilizing the biasing element 20.

Furthermore, a protruding part of the actuator 9 is arranged within the cup-shaped connector element 10, and is configured to push against a centre part of the closed bottom 22 of the cup-shaped connector element 10. Arranging the cup-shaped connector element 10 within the biasing element 20 and part of the actuator 9 within the cup-shaped connector element 10 provides a very compact valve 1, i.e. the size of the valve 1, in particular the height of the valve 1, is minimised. Furthermore, arranging part of the actuator 9 within the cup-shaped connector element 10, and establishing contact between the actuator 9 and the cup-shaped connector element 10 via a centre part of the closed bottom 22, results in a well-defined and controlled transfer of force from the actuator 9 to the cup-shaped connector part 10, and further on to the movable valve element 8, as well as improved guiding of the biasing element 20.

## Claims

1. A valve (1) comprising a valve housing (2) accommodating a movable valve element (8) for controlling a fluid flow through the valve (1), and an actuator (9) being operatively connected to the movable valve element (8) so as to cause movements thereof, wherein the valve (1) further comprises:
- a cup-shaped connector element (10) connected to the movable valve element (8), the cup-shaped connector element (10) defining a bottom (22), at least one wall part (23) and an open top (24), and
- a biasing element (20) configured to bias the cup-shaped connector element (10) in a first direction,
wherein at least the bottom (22) of the cup-shaped connector element (10) is surrounded by the biasing element (20), and wherein the actuator (9) is configured to push the cup-shaped connector element (10) in a second direction being opposite to the first direction, against a biasing force provided by the biasing element (20), via a contact region defined on the bottom (22) of the cup-shaped connector element (10).

2. A valve (1) according to claim 1, wherein at least part of the actuator (9) is accommodated in an inner space of the cup-shaped connector element (10), the inner space being delimited by the bottom (22) and the at least one wall part (23).

3. A valve (1) according to claim 1 or 2, wherein the cup-shaped connector element (10) comprises an annular collar (21) arranged near the open top (24), and wherein the biasing element (20) abuts the cup-shaped connector element (10) at the annular collar (21).

4. A valve (1) according to any of the preceding claims, wherein the contact region is arranged in a centre part of the bottom (22) of the cup-shaped connector element (10).

5. A valve (1) according to any of the preceding claims, wherein the cup-shaped connector element (10) is connected to the movable valve element (8) via a valve stem (11).

6. A valve (1) according to claim 5, wherein the valve stem (11) extends from the bottom (22) of the cup-shaped connector element (10) towards the movable valve element (8).

7. A valve (1) according to any of the preceding claims, wherein the biasing element (20) is a helical spring, and wherein the cup-shaped connector element (10) is arranged at least partly inside the helical spring.

8. A valve (1) according to any of the preceding claims, wherein the cup-shaped connector element (10) and the biasing element (20) are at least partly accommodated inside the valve housing (2).

9. A valve (1) according to any of the preceding claims, wherein the valve (1) is a three-way valve.
